# EUROPÄISCHE PATENTANMELDUNG

(11) **EP 0 833 530 A2**
(43) Veröffentlichungstag der Anmeldung: **01.04.1998**
(21) Anmeldenummer: 97115553.6
(22) Anmeldetag: 08.09.1997
(51) Int. Cl.: H04Q 7/22, H04Q 7/38, H04M 3/42

(54) **Verfahren zur Verbindungssteuerung von drahtlos an Kommunikationsnetze angeschlossenen Kommunikationsendgeräten**

(30) Priorität: 26.09.1996 DE 19639608
(71) Anmelder: SIEMENS AKTIENGESELLSCHAFT, 80333 München (DE)
(72) Erfinder: Morper, Hans-Jochen, 85253 Erdweg (DE)

(57) **Zusammenfassung**

An an Basisstationen (BS-H) eines Heimbereichs (H) und an ein Kommunikationsnetz (KN) drahtlos angeschlossene Drahtlos-Kommunikationsendgeräte (KE) gerichtete Anrufe (ar) werden mit Hilfe des Kommunikationsnetzes (KN) an die zugehörige Basisstation (BS-H) im Heimbereich (H) vermittelt und mit deren Hilfe die Verfügbarkeit des angerufenen Drahtlos-Kommunikationsendgerätes (KE) ermittelt. Bei einer Nicht-Verfügbarkeit der angerufenen Drahtlos-Kommunikationsendgeräte (KE) werden mit Hilfe des in der Basisstation (BS-H) im Heimbereich (H) vorgesehenen Leistungsmerkmals 'Call Deflection' die Anrufe (ar) an das Kommunikationsnetzes (KN) umgelenkt. Das erfindungsgemäße Verfahren ist mit geringstem Aufwand in vorhandene Kommunikationsnetze (KN) integrierbar.

## Beschreibung

In Heimbereichen bzw. Wohnbereichen werden Drahtlos-Kommunikationsendgeräte - in der Fachwelt auch als 'Cordless'- oder Schnurlos-Endgeräte bekannt - eingesetzt, die drahtlos an im Heimbereich angeordneten Basisstationen angeschlossen sind. Die Luftschnittstelle ist hierbei gemäß dem DECT-Standard (Digital Enhanced Cordless Telecommunications) realisiert. Für zukünfige Drahtlos-Kommunikationsendgeräte und Basisstationen sind weitere Standards wie beispielsweise der GAP-Standard (Generic Access Profile) vorgesehen, wobei diese weiteren Standards auf dem DECT-Standard basieren und jeweils zusätzliche anwendungsspezifische Funktionen vorgesehen sind. Vorteilhaft werden die Basisstationen über einen ISDN-Basisanschluß an ein ISDN-Kommunikationsnetz angeschlossen, wobei der ISDN-Basisanschluß zwei Nachrichtenkanäle mit einer Bandbreite von 64 kbit/s für zwei Verbindungen für eine Daten- oder Sprachinformations-Übermittlung und einen Signalisierungskanal für die Übermittlung von Signalisierungsinformationen umfaßt. Die Drahtlos-Kommunikationsendgeräte werden hierbei mit einer Rufnummer des öffentlichen ISDN-Kommunikationsnetzes angerufen, wobei ein Anruf an die zugehörige Basisstation bzw. das Drahtlos-Kommunikationsendgerät vermittelt wird.

Des weiteren sind für Kommunikationsnetze, insbesondere öffentliche ISDN-Kommunikationsnetze, Teil-Kommunikationsnetze bzw. Zubringernetze geplant, in denen an Basisstationen drahtlos bzw. schnurlos Drahtlos-Kommunikationsendgeräte angeschlossen werden. Die Luftschnittstelle der drahtlosen Anschlüsse ist ebenfalls gemäß dem DECT-Standard realisiert. Die Drahtlos-Kommunikationsendgeräte sowie die Basisstationen werden gemäß dem GAP-Standard oder einem in Standardisierung befindlichen CAP-Standard (CTM(Cordless Terminal Mobility) Access Profile) realisiert, wobei diese Standards auf dem DECT-Standard für die Luftschnittstelle basieren. Für derartige Drahtlos-Kommunikationsendgeräte können spezielle Mobilrufnummern vorgesehen werden, mit deren Hilfe Verbindungen vom ISDN-Kommunikationsnetz zu den Drahtlos-Kommunikationsendgeräten aufgebaut werden. Ein im öffentlichen Kommunikationsnetz eingeleiteter Anruf mit beispielsweise einer Mobilrufnummer wird über das entsprechende Zubringernetz bzw. dessen betroffene Basisstation an das durch die Mobilrufnummer bestimmte Drahtlos-Kommunikationsendgerät vermittelt. Das Drahtlos-Kommunikationsendgerät stellt hierbei ein Kommunikationsendgerät des öffentlichen Kommunikationsnetzes, insbesondere eines öffentlichen ISDN-Kommunikationsnetzes, dar.

Weiterhin ist vorgesehen, daß ein Drahtlos-Kommunikationsendgerät sowohl im Heimbereich als auch im öffentlichen Kommunikationsnetz eingesetzbar ist, wobei Drahtlos-Kommunikationsendgeräte im Heimbereich vielfach vorhanden sind und eine Benutzung im öffentlichen Kommunikationsnetz eine vorteilhafte Ergänzung darstellt. Da sich der Heim- und der öffentliche Bereich hinsichtlich der Funkbereiche überschneiden können, werden sich die Drahtlos-Kommunikationsendgeräte häufig in zwei Bereichen befinden, in denen sie erreichbar sind bzw. von denen Verbindungen in die jeweiligen Bereiche aufgebaut werden können.

Die der Erfindung zugrundeliegende Aufgabe besteht darin, eine einfach zu realisierende Verbindungssteuerung bzw. vermittlungstechnische Steuerung von Anrufen für eine zusätzliche Benutzung von Drahtlos-Kommunikationsendgeräten in öffentlichen Kommunikationsnetzen auszugestalten. Die Aufgabe wird durch die Merkmale des Patentanspruchs 1 gelöst.

Der wesentliche Aspekt des erfindungsgemäßen Verfahrens ist darin zu sehen, daß an ein Drahtlos-Kommunikationsendgerät gerichtete Anrufe mit Hilfe des Kommunikationsnetzes an die zugehörige Basisstation im Heimbereich vermittelt und durch diese die Verfügbarkeit des angerufenen Drahtlos-Kommunikationsendgerätes festgestellt wird. Bei einer Nicht-Erreichbarkeit des angerufenen Drahtlos-Kommunikationsendgerätes wird mit Hilfe der zugehörigen Basisstation der Anruf an das Teilkommunikationsnetz bzw. Zubringernetz umgelenkt. Durch das erfindungsgemäße Verfahren wird folglich zuerst festgestellt, ob das jeweilige Drahtlos-Kommunikationsendgerät im 'tarifgünstigen' Heimbereich erreichbar ist und nur bei einer Nichterreichbarkeit wird der Anruf auf das öffentliche Zubringernetz umgelenkt. Im Teil-Kommunikationsnetz bzw. Zubringernetz wird für den umgelenkten Anruf ein Verbindungsaufbau mit Hilfe einer Mobilrufnummer des jeweiligen Drahtlos-Kommunikationsendgerätes zu dem jeweiligen Drahtlos-Kommunikationsendgerät eingeleitet - Anspruch 2. Durch das erfindungsgemäße Verfahren wird die zusätzliche Benutzung von für den Heimbereich konzipierten Drahtlos-Kommunikationsendgerät mit geringsten Modifikationen in den vorhandenen Kommunikationsnetzen möglich. Dies bedeutet zusätzlich einen geringen Aufwand für die Implementierung des erindungsgemäßen Verfahrens.

Die Verfügbarkeit des Drahtlos-Kommunikationsendgerätes wird vorteilhaft mit Hilfe eines in der Basisstation BS-H des Heimbereichs H vorgesehenen Paging-Verfahrens ermittelt - Anspruch 3. Derartige Paging-Verfahren sind bei den drahtlosen Anschlüssen häufig bereits realisiert und können vorteilhaft ohne Änderungen mitbenutzt werden, wobei das Paging-Verfahren vorteilhaft gemäß dem bekannten DECT-Standard durchgeführt wird - Anspruch 4.

Vorteilhaft repräsentiert das Kommunikationsnetz ein öffentliches ISDN-Kommunikationsnetz - Anspruch 4. Bei einem ISDN-Kommunikationsnetz wird die Umlenkung des Rufes mit Hilfe des ISDN-Leistungsmerkmals 'Call Deflektion' realisiert - Anspruch 5. Durch die Verwendung dieses ISDN-Leistungsmerkmals 'Call Deflection' oder Rufumlenkung wird der Implementierungsaufwand des erfindungsgemäßen Verfahrens weiter reduziert. Bei einer Implementierung des erfindungsgemäßen Verfahrens in ein ISDN-Kommunikationsnetz sind die Kommunikationsanschlüsse vorteilhaft durch einen SO- oder UKO-ISDN-Basisanschluß (S0) realisiert - Anspruch 7.

Nach weiteren vorteilhaften Ausgestaltungen des erfindungsgemäßen Verfahrens ist der drahtlose Anschluß von Drahtlos-Kommunikationsendgeräten an die Basisstationen im Heimreich gemäß dem DECT- oder GAP-Standard - Anspruch 8. und der drahtlose Anschluß von Drahtlos-Kommunikationsendgeräten im Zubringernetz - d.h. im öffentlichen Kommunikationsnetz gemäß dem DECT- oder CAP-Standard realisiert - Anspruch 9.

Im folgenden wird das erfindungsgemäße Verfahren anhand eines Blockschaltbildes näher erfläutert.

Das Blockschaltbild zeigt ein Kommunikationsnetz KN - durch strichpunktierte Linien angedeutet - , das durch ein Teil-Kommunikationsnetz, insbesondere ein Zubringernetz ACCESS und eine Basisstation BS-H eines Heim-Bereiches H gebildet ist - durch strichpunktierte Linien angedeutet. Das Kommunikationsnetz KN ist vorteilhaft durch ein ISDN-Kommunikationsnetz ISDN realisiert. Ein ISDN-Basisanschluß S0, UK0 des ISDN-Kommunikationsnetzes ISDN ist für den Anschluß der Basisstation BS-H im Heim-Bereich vorgesehen. Der ISDN-Basisanschluß S0,UK0 umfaßt zwei Nachrichtenkanäle B mit jeweils einer Bitrate von 64 kbit/s und einen Signalisierungskanal D mit einer Bitrate von 16 kbit/s.

Über einen weiteren Anschluß des ISDN-Kommunikationsnetzes ISDN, der beispielsweise durch eine V.5-Schnittstelle realisiert ist, ist eine verkehrskonzentrierende Einrichtung RDU angeschlossen. Diese ist mit Basisstationen BS des Zubringernetzes ACCESS verbunden. Sowohl die Funkbereiche dieser Basisstationen BS als auch die der weiteren verkehrskonzentrierenden Einrichtungen RDU und der zugehörigen Verbindungsleitungen - nicht dargestellt - repräsentieren das Zubringernetz ACCESS. Sowohl das ISDN-Kommunikationsnetz ISDN als auch das Zubringernetz ACCESS stellen öffentliche Kommunikationsnetze dar, die auch durch ein einziges ISDN-Kommunikationsnetz repräsentiert können, in dem einheitliche Rufnummern für drahtgebundene und drahtlose Kommunikationsendgeräte vorgesehen sind. Alternativ können diese öffentlich zugänglichen Kommunikationsnetze auch durch private Betreiber installiert und betrieben werden.

Sowohl im Zubringernetz ACCESS als auch im Heim-Bereich H sind an die Basisstationen BS-H, BS Drahtlos- Kommunikationsendgeräte KE angeschlossen. Hierbei ist die Luftschnittstelle gemäß dem bekannten DECT-Standard realisiert. Die Drahtlos-Kommunikationsendgeräte KE und die Basisstation BS-H können im privaten Bereich gemäß dem GAP-Standard (Generic Access Profile) ausgestaltet werden. Im Zubringernetz ACCESS können die Basisstationen BS und die Drahtlos-Kommunikationsendgeräte KE alternativ durch einen CAP-Standard (CTM (Cordless Terminal Mobility) Access Profile) realisiert werden.

Der ISDN-Basisanschluß S0, UK0 bzw. die Basisstation BS-H und die daran angeschlossenen Drahtlos-Kommunikationsendgeräte KE sind über eine Rufnummer rn erreichbar, wobei die Rufnummer rn eine ISDN-kommunikationsnetzspezifische Rufnummer rn darstellt. Die im Heim-Bereich H drahtlos angeschlossenen Drahtlos-Kommunikationsendgeräte KE sind in der jeweiligen Basisstation BS-H subskribiert und werden für einen Verbindungsaufbau genutzt.

Ein Verbindungsaufbau zu den Drahtlos-Kommunikationsendgeräten KE des Zubringernetzes ACCESS wird mit Hilfe einer Mobilrufnummer mrn durchgeführt. Diese Mobilrufnummer mrn unterscheidet sind von der Rufnummer rn des ISDN-Kommunikationsnetzes ISDN und wird gebührentechnisch unterschiedlich behandelt. Die Mobilrufnummer mrn muß dem Teilnehmer bzw. Kommunikationsendgerät KE nicht bekannt sein, da der Anruf (ar) beim erfindungsgemäßen Verfahren stets zuerst an die Basisstation BS-H im Heimbereich H vermittelt wird. Bei einheitlichen Rufnummern rn kann ggf. auf die Mobilrufnummer mrn verzichtet und mit der kommunikationsnetzspezifischen Rufnummer rn ein Verbindungsaufbau zum Zubringernetz ACCESS erfolgen.

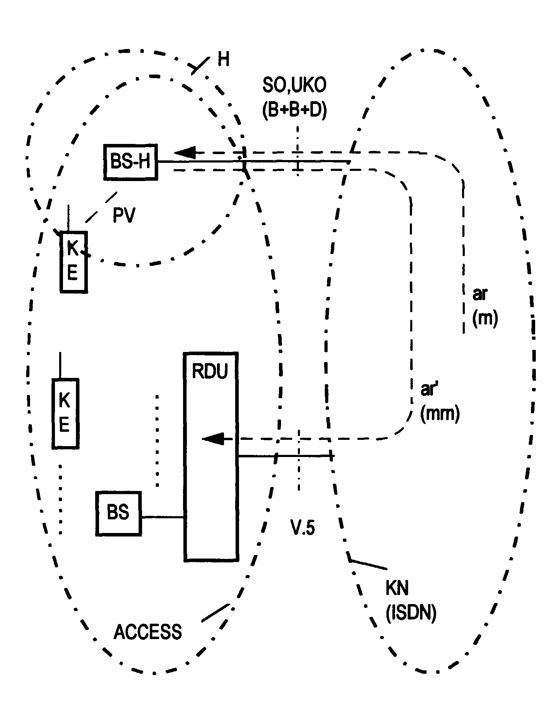

Für das Ausführungsbeispiel sei angenommen, daß ein Drahtlos-Kommunikationsendgerät KE des Heim-Bereichs H auch im Zubringernetz ACCESS genutzt werden kann. Dies bedeutet eine zusätzliche, vorteilhafte Nutzung der bereits im Heim-Bereich H vorhandenen Drahtlos-Kommunikationsendgeräte KE. Erfindungsgemäß wird ein an ein Drahtlos-Kommunikationsendgerät KE gerichteter Anruf ar prinzipiell zuerst zur Basisstation BS-H des Heim-Bereichs H vermittelt, wobei für das angerufene Drahtlos-Kommunikationsendgerät KE eine Subskribierung bzw. eine Nutzungserlaubnis sowohl für den Heim-Bereich H als auch für das Zubringernetz ACCESS bzw. das ISDN-Kommunikationsnetz ISDN vorgesehen ist. Bei einem in der Basisstation BS-H ankommenden Anruf ar wird mit Hilfe des beim DECT-Standard definierten, 'drahtlosen' Paging-Verfahrens - in der Zeichnung durch die Bezeichnung PV angedeutet - überprüft, ob das angerufene Drahtlos-Kommunikationsendgerät KE erreichbar ist. Ist das angerufene Drahtlos-Kommunikationsendgerät KE erreichbar, wird der ankommende Anruf ar an das Drahtlos-Kommunikationsendgerät KE vermittelt.

Bei einer Feststellung der Nicht-Erreichbarkeit des angerufenen Drahtlos-Kommunikationsendgerätes KE wird von der Basisstation BS-H eine Umlenkung des ankommenden Anrufs ar zum Zubringernetz ACCESS veranlaßt. Diese Umlenkung ist sinnvoll, da sich das angerufene Drahtlos-Kornmunikationsendgerät KE im Funkbereich der Basisstationen BS des Zubringernetzes ACCESS befinden könnte. Anstelle der Rufnummer rn des ISDN-Kommunikationsnetzes ISDN wird, sofern vorgesehen, bei der Umlenkung die Mobilrufnummer mrn in den nun umgelenkten Anruf ar' eingefügt. Im Zubringernetz ACCESS wird über die betreffende Basisstation BS ein Verbindungsaufbau zu dem angerufenen Drahtlos-Kommunikationsendgerät KE eingeleitet. Sollte bei diesem Verbindungsaufbau ebenfalls die Nicht-Verfügbarkeit des angerufenen Drahtlos- Kommunikationsendgerätes KE festgestellt werden, wird der Anruf (AR) zurückgewiesen. Eine Nicht-Verfügbarkeit der Drahtlos-Kommunikationsendgeräte KE liegt beispielsweise dann vor, wenn dieses ausgeschaltet, d.h. sich im stromlosen Zustand befindet.

Durch das erfindungsgemäße Verfahren ist eine eindeutige Vorgehensweise definiert, um Verbindungen, d.h. Anrufe ar, die an ein Drahtlos-Kommunikationsendgerät KE gerichtet sind, das sowohl im Heim-Bereich H als auch im Zubringernetz Access des ISDN-Kommunikationsnetzes ISDN subskribiert bzw. zugelassen ist, wobei die vorhandenen Kommunikationsnetz nicht beeinflußt bzw. modifiziert werden. Das erfindungsgemäße Verfahren ist folglich mit geringstem Aufwand in die bereits vorhandenen Kommunikationsnetze KN, insbesondere das ISDN-Kommunikationsnetz ISDN und den Heim-Bereich H zu implementieren, wobei für die Umlenkung von Anrufen (ar) in den Basisstation BS-H im Heimbereich H vorhandene ISDN-Leistungsmerkmale wie Paging-Verfahren und 'Call-'Deflection' benutzt werden, wodurch der Implementierungsaufwand zusätzlich reduziert wird.

## Patentansprüche

1. Verfahren zur Verbindungssteuerung in einem Kommunikationsnetz (KN),
- bei dem an Basisstationen (BS-H) eines Heimbereichs (H) drahtlos angeschlossene Drahtlos-Kommunikationsendgeräte (KE) mit Hilfe einer Rufnummer (rn) anrufbar sind, wobei die Basisstationen (BS-H) an Kommunikationsanschlüsse (S0, UK0) des Kommunikationsnetzes (KN) angeschlossen sind,
- bei dem die Drahtlos-Kommunikationsendgeräte (KE) zusätzlich drahtlos an ein Teil-Kommunikationsnetz (ACCESS) des Kommunikationsnetzes (KN) angeschlossen sind,
- bei dem an ein Drahtlos-Kommunikationsendgerät (KE) gerichtete Anrufe (ar) mit Hilfe des Kommunikationsnetzes (KN) an die zugehörige Basisstation (BS-H) im Heimbereich (H) vermittelt und mit deren Hilfe die Verfügbarkeit des angerufenen Drahtlos-Kommunikationsendgerätes (KE) ermittelt wird,
- bei dem bei einer Nicht-Erreichbarkeit des angerufenen Drahtlos-Kommunikationsendgerätes (KE) mit Hilfe der zugehörigen Basisstation (BS-H) der Anruf (ar) an das Teil-Kommunikationsnetz (ACCESS) umgelenkt wird.

2. Verfahren nach Anspruch 1, dadurch **gekennzeichnet**, daß im Teil-Kommunikationsnetz (ACCESS) bei einem umgelenkten Anruf (ar') ein Verbindungsaufbau mit Hilfe einer Mobil-Rufnummer (mrn) des jeweiligen Drahtlos-Kommunikationsendgerätes (KE) zu dem jeweiligen Drahtlos-Kommunikationsendgerät (KE) eingeleitet wird.

3. Verfahren nach einem der Ansprüche 1 oder 2, dadurch **gekennzeichnet**, daß die Verfügbarkeit des Drahtlos-Kommunikationsendgerätes (KE) mit Hilfe eines in der Basisstation (BS-H) des Heimbereich (H) vorgesehen Paging-Verfahrens ermittelt wird.

4. Verfahren nach Anspruch 3, dadurch **gekennzeichnet**, daß das Paging-Verfahren gemäß dem DECT-Standard durchgeführt wird.

5. Verfahren nach einem der Ansprüche 1 bis 4, dadurch **gekennzeichnet**, daß das Kommunikationsnetz (KN) bzw. Teil-Kommunkationsnetz (ACCESS) ein öffentliches ISDN-Kommunikationsnetz (ISDN) repräsentiert.

6. Verfahren nach Anspruch 5, dadurch **gekennzeichnet**, daß die Umlenkung des Rufes (ar) mit Hilfe des ISDN-Leistungsmerkmales 'Call Deflection' realisiert ist.

7. Verfahren nach einem der Ansprüche 5 oder 6, dadurch **gekennzeichnet**, daß der Kommunikationsanschluß (S0,UK0) durch einen SO- oder UKO-ISDN-Basisanschluß (S0,UK0) realisiert ist.

8. Verfahren nach einem der Ansprüche 1 bis 7, dadurch **gekennzeichnet**, daß der drahtlose Anschluß von Drahtlos-Kommunikationsendgeräten (KE) an die Basisstationen (BS-H) im Heimreich (H) gemäß dem DECT-, GAP- oder CAP-Standard realisiert ist.

9. Verfahren nach einem der Ansprüche 1 bis 8, dadurch **gekennzeichnet**, daß der drahtlose Anschluß von Drahtlos-Kommunikationsendgeräten (KE) an Basisstationen (BS) gemäß dem DECT- oder CAP- Standard realisiert ist.
